# EUROPÄISCHE PATENTANMELDUNG

(11) **EP 0 753 774 A2**
(43) Veröffentlichungstag der Anmeldung: **15.01.1997**
(21) Anmeldenummer: 96110352.0
(22) Anmeldetag: 27.06.1996
(51) Int. Cl.: G02B 6/38

(54) **Elektrische Steckvorrichtung**

(30) Priorität: 11.07.1995 DE 19525212; 11.11.1995 DE 19542166
(71) Anmelder: Gebrüder Merten GmbH & Co. KG, 52674 Wiehl (DE)
(72) Erfinder: Erbse, Karl-Ulrich, Dipl.-Phys., 51647 Gummersbach (DE); Gringmann, Klaus, 51647 Gummersbach (DE); Schmidt, Helmut, Dipl.-Ing., 51647 Gummersbach (DE); Stefanski, Manfred, Dipl.-Ing., 51647 Gummersbach (DE); Vicktorius, Richard, Dipl.-Ing., 50739 Köln (DE)
(74) Vertreter: Selting, Günther, Dipl.-Ing.

(57) **Zusammenfassung**

Die Steckvorrichtung enthält eine Steckdose (SD) für die übliche elektrische Kontaktnahme mit einem Stecker. Zusätzlich ist eine Datenübertragung per Lichtleiter über die Steckvorrichtung vorgesehen. Hierzu ist die Steckdose (SD) mit einem Lichtkopf (22) versehen, der Licht empfängt und/oder Licht aussendet und aus der Abdeckung (16) der Steckdose (SD) hervorsteht. Beim Einsetzen eines Steckers (ST) wird der Lichtkopf (22) vom Stecker (ST) gegen die Wirkung einer Federvorrichtung (31) zurückgedrückt. Dadurch wird ein definierter Lichtübergang zwischen Steckdose (SD) und Stecker (ST) erreicht.

## Beschreibung

Die Erfindung betrifft eine elektrische Steckvorrichtung mit einem Stecker und einer Steckdose, durch die ein Verbraucher an das Versorgungsnetz angeschlossen werden kann.

Aus DE 32 26 265 A1 ist ein flexibles elektrisches Kabel bekannt, das außer den elektrischen Versorgungsleitungen für den Netzanschluß eines Gerätes einen Lichtwellenleiter enthält, über den Signale übertragen werden können. Während elektrische Signalleitungen, die zusammen mit Versorgungsleitungen in einem gemeinsamen Kabel verlegt sind, von den Versorgungsleitungen gestört werden (Übersprechen), werden Lichtsignale durch Ströme oder Spannungen der Versorgungsleitungen nicht beeinflußt.

Aus DE 32 27 770 C2 ist eine elektrische Steckvorrichtung in Form einer Steckdose bekannt, die den Anschluß eines Netzkabels an installierte Netzleitungen ermöglicht und außerdem einen gebäudeseitig installierten Lichtwellenleiter mit einem Lichtwellenleiter des anzuschließenden Kabels optisch verbindet. Hierzu ist wenigstens ein Kontaktteil der elektrischen Steckvorrichtung der Steckdose zugleich als Lichtwellenleiter-Steckvorrichtung ausgebildet. Die Steckvorrichtung verbindet daher den elektrischen und den optischen Teil eines Kabels mit den gebäudeseitigen elektrischen Versorgungsleitungen und den optischen Datenleitungen.

In den letzten Jahren gewinnt die Hausleittechnik eine immer größere Bedeutung. Hierbei werden Datentelegramme über ein in einem Gebäude installiertes Busleitungssystem übertragen. Das Busleitungssystem enthält elektrische Busankoppler, die imstande sind, Datentelegramme zu erzeugen und in das Busleitungssystem einzugeben und Datentelegramme zu empfangen und auszuwerten. Die Busankoppler werden jeweils mit einem externen elektrischen Gerät verbunden. Auf diese Weise ist es möglich, über das Busleitungssystem elektrische Geräte im Gebäude zu überwachen, fernzusteuern oder zu schalten. Ein derartiges Signalübertragungssystem für die Hausleittechnik ist in EP 0 344 609 B1 beschrieben.

Der Erfindung liegt die Aufgabe zugrunde, eine elektrische Steckvorrichtung zu schaffen, die den gleichzeitigen Anschluß eines elektrischen Gerätes an das Stromnetz und ein elektrisches Busleitungssystem ermöglicht, ohne daß in dem anzuschließenden Kabel die Datenleitungen von den Netzleitungen beeinflußt würden.

Die Lösung dieser Aufgabe erfolgt erfindungsgemäß mit den im Patentanspruch 1 angegebenen Merkmalen.

Die erfindungsgemäße Steckvorrichtung ist generell auf der Grundlage der üblichen Steckdosen für die Netzversorgung konzipiert. Derartige Steckdosen weisen einen an einem Halter befestigten Sockel, Steckklemmen und Anschlußklemmen für Netzleitungen auf.

Nach der Erfindung werden Lichtsignale zwischen der Steckdose und dem Stecker ausgetauscht, damit ein externes Gerät, das über den Stecker an die Steckdose angeschlossen ist, über mindestens eine Lichtleitung mit der Steckdose kommunizieren kann. Die Steckdose stellt normalerweise das eine Ende des Lichtweges dar. Sie enthält einen oder vorzugsweise mehrere lichtelektrische Wandler, die eine Umwandlung zwischen Lichtsignalen und elektrischen Signalen vornehmen. Es ist aber auch möglich, daß von der Steckdose Lichtsignale innerhalb der Gebäudeinstallation weitergeleitet werden.

Die Besonderheit der Erfindung besteht darin, daß die Steckdose einen axial bewegbaren vorstehenden Lichtkopf enthält, der im Lichtweg das Übergangsstück von der Steckdose zum Stecker darstellt. Dieser Lichtkopf ist federnd abgestützt. Beim Einschieben eines Steckers in die Steckdose oder beim Befestigen der Abdeckung an einen Sockel der Steckdose wird der Lichtkopf ein Stück weit zurückgedrängt.

Durch den axial verschiebbaren Lichtkopf wird erreicht, daß etwaige Maßungenauigkeiten der Steckdose oder Montagefehler ausgeglichen werden. Insbesondere wird auch ein sogenannter "Tapetenausgleich" erreicht, bei dem unterschiedliche Abstände der Abdeckung von dem Sockel der Steckdose ausgeglichen werden. Solche unterschiedlichen Abstände entstehen beispielsweise durch unterschiedlich dicke Tapeten, an denen sich die der Steckdose vorgesetzte Abdeckung abstützt. Durch unterschiedliche Tapetendicken oder Ungenauigkeiten bei der Wandmontage der Steckdose kann es vorkommen, daß die Abdeckung nicht den vorgeschriebenen Abstand von dem Sockel der Steckdose hat oder nicht vollständig am Sockel anliegt. Dadurch, daß der Lichtkopf entweder an der Abdeckung oder an dem Stecker anliegt und durch eine Federvorrichtung gespannt ist, wird stets eine definierte Position des Lichtkopfes entweder in Bezug auf die Abdeckung oder in Bezug auf den in die Steckdose eingesetzten Stecker erreicht, unabhängig von der Position, den die Abdeckung in Bezug auf den Steckdosensockel einnimmt.

Wenn der Lichtkopf aus der Abdeckung vorsteht und somit von dem Stecker zurückgedrückt wird, wird ein definierter Lichtübergang zwischen Stecker und Lichtkopf sichergestellt, weil entweder ein Luftspalt definierter Breite entsteht oder überhaupt kein Luftspalt, wenn die Lichtleiter von Lichtkopf und Stecker mit ihren Stirnseiten unmittelbar zur Anlage kommen. Auf diese Weise werden die Lichtverluste beim Übergang zwischen Steckdose und Stecker minimiert und es wird eine definierte Ankopplung erreicht. Außerdem ist es nicht erforderlich, daß der Stecker exakt bis zum Boden der Abdeckung der Steckdose vorgeschoben ist. Etwaige Toleranzen von Steckdose und Stecker werden durch den verschiebbaren Lichtkopf ausgeglichen.

Der Lichtkopf enthält mindestens einen mit einem lichtelektrischen Wandler verbundenen Lichtleiter oder mindestens einen lichtelektrischen Wandler. Im zweiten Fall erfolgt ein direkter Lichtübergang von dem Stecker zum lichtelektrischen Wandler, ohne daß in der Steckdose ein Lichtleiter vorhanden wäre.

Dadurch, daß der Lichtkopf beim Einstecken eines Steckers zurückweicht, ist es möglich, die Steckdose nicht nur in Verbindung mit einem Stecker zu verwenden, der Lichtleiter enthält, sondern auch in Verbindung mit einem normalen elektrischen Stecker, der keine Lichtleiter enthält.

Vorzugsweise ist der Stecker an seiner Stirnseite mit einer Zentrierausnehmung für die Seitenzentrierung des Lichtkopfes versehen. Diese Zentrierausnehmung hat einen trichterförmig abgeschrägten Rand. Ein abgeschrägter Rand ist auch an dem Lichtkopf vorgesehen. Beim Einstecken des Steckers in die Steckdose wird auf diese Weise der Lichtkopf seitlich zentriert, und zwar in zwei senkrecht zueinander stehenden Richtungen, so daß in jedem Fall sichergestellt ist, daß die Lichtübergangsfenster von Lichtkopf und Stecker voll miteinander zur Deckung gelangen. Außerdem entsteht dadurch, daß der Lichtkopf in die Zentrierausnehmung des Steckers eintaucht, eine zusätzliche Abschottung gegen externen Streulichteinfall.

Gemäß einer bevorzugten Ausführungsform der Erfindung ist der (mindestens eine) lichtelektrische Wandler an dem Lichtkopf befestigt, so daß er dessen Bewegungen mitmacht. Der lichtelektrische Wandler kann auf einer Leiterplatte angeordnet sein, die auch andere elektrische Komponenten trägt, beispielsweise einen Busankoppler. Ein solcher Busankoppler ist eine elektronische Vorrichtung, die mit anderen Busankopplern einen elektronischen Telegrammverkehr durchführen kann, z.B. ein "Bus Interface Module" (BIM). Sie enthält einen Mikroprozessor und einen elektronischen Speicher. Es ist auch möglich, einen passiven Busankoppler ohne Mikroprozessor zu verwenden. Während die Datenverarbeitung in dem gebäudeseitigen elektrischen Hausleitsystem durchgeführt wird, hat die Steckdose die Aufgabe, Signale, die von dem angeschlossenen externen Gerät über Lichtleiter übertragen werden, in elektrische Signale umzuwandeln und/oder elektrische Signale, die von dem Busankoppler erzeugt werden, in Lichtsignale für das angeschlossene Gerät umzuwandeln. Auf diese Weise können die üblichen elektrischen Hausleitsysteme verwendet werden, die vom Versorgungsnetz entkoppelt sind und somit durch das Versorgungsnetz nicht gestört werden, während der Anschluß des elektrischen Gerätes über ein flexibles Kabel erfolgt, in dem die elektrischen Versorgungsleitungen mit Lichtleitern kombiniert sind. Die Signale in Lichtwellenleitern werden durch Spannungen oder Ströme der Versorgungsleitungen nicht beeinflußt, so daß kein Übersprechen stattfindet.

Generell ist die Erfindung auch anwendbar, wenn zwischen Steckdose und Stecker nur ein einziger Lichtleiterweg vorhanden ist. Auf diesem Lichtleiterweg kann eine unidirektionale oder auch eine bidirektionale Datenübertragung erfolgen.

Im folgenden werden Ausführungsbeispiele der Erfindung unter Bezugnahme auf die Zeichnungen näher erläutert.

Es zeigen:

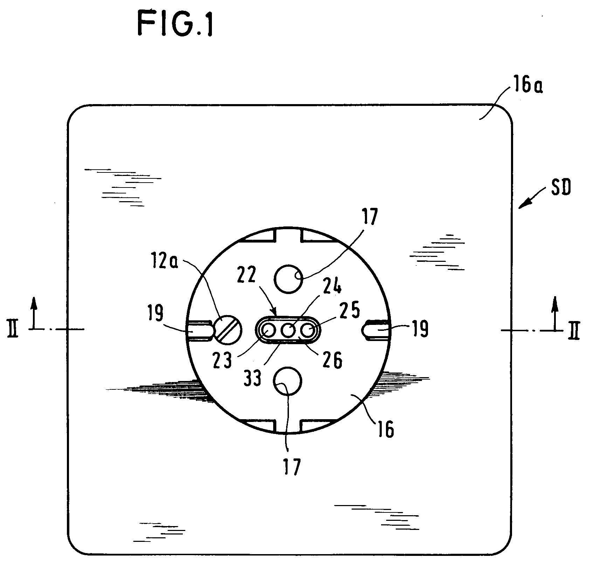

- Fig. 1: eine Frontansicht einer ersten Ausführungsform der Steckdose,
- Fig. 2: eine Seitenansicht des zugehörigen Steckers, teilweise geschnitten,
- Fig. 3: einen Längsschnitt durch die Steckdose nach Fig. 1 entlang der Linie II-II,
- Fig. 4: einen Schnitt entlang der Linie IV-IV von Fig. 3,
- Fig. 5: eine Ausführungsform des Lichtkopfes mit Y-Splitter,
- Fig. 6: einen Schnitt entlang der Linie VI-VI von Fig. 5,
- Fig. 7: eine Frontansicht der Steckdose bei abgenommener Abdeckung, und
- Fig. 8: eine zweite Ausführungsform der Steckdose.

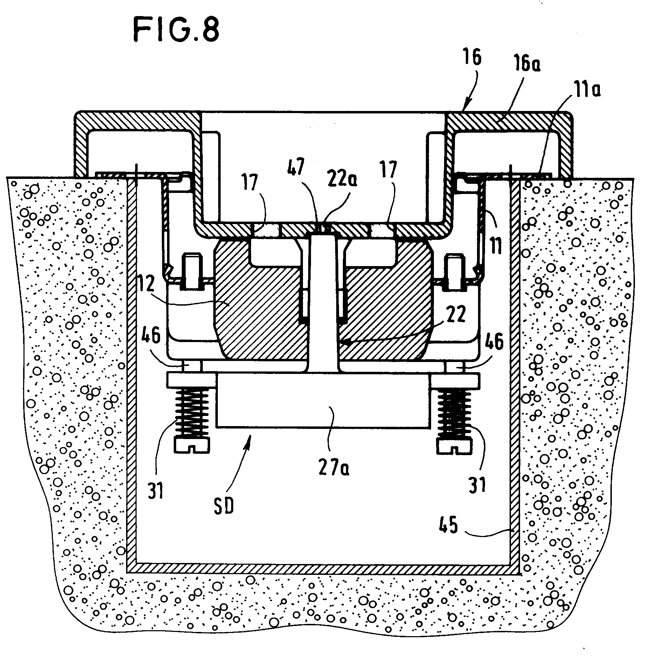

Die dargestellte Steckvorrichtung besteht aus einer Steckdose SD und einem Stecker ST. Die Steckdose SD weist gemäß Fig. 7 einen Rahmen 11 auf, der aus Metall besteht und sämtliche Komponenten der Steckdose trägt. Zu dem Rahmen 11 gehört eine Frontplatte 11a, die in der Umgebung einer Unterputzdose an eine Wand angelegt wird. Der Rahmen 11 weist außerdem Krallen zur Befestigung der Steckdose in einer Unterputzdose auf.

Der Rahmen 11 enthält einen aus Isoliermaterial bestehenden Sockel 12, der Steckklemmen 13 für die Steckerstifte des Steckers ST und Anschlußklemmen 14 für Netzleitungen trägt. Zur Frontseite hin ist in den Rahmen 11 eine aus Kunststoff bestehende topfförmige Abdeckung 16 eingesetzt, der bis zum Sockel 12 reicht und an diesem mit einer Schraube 12a verschraubt ist. Die Abdeckung 16 enthält Löcher 17 für den Durchtritt der Kontaktstifte des Steckers ST. An der Frontseite ist die Abdeckung 16 mit einer Blendenplatte 16a versehen, die dem Frontrahmen 11a des Rahmens 11 vorgesetzt ist. Die Abdeckung 16 bildet eine Aufnahme für den Stecker ST. Diese Netzleitungen führen beispielsweise eine Spannung von 250 V 50 Hz.

Durch seitliche Schlitze der Abdeckung 16 ragen die Federschenkel 19 eines Schutzleiter-Bügels 20 hindurch, der auf dem Sockel 12 befestigt ist und der über eine Kontaktschraube 21 mit Massepotential verbunden wird.

An dem Sockel 12 ist ein Lichtkopf 22 angebracht. Der Lichtkopf 22 besteht aus einem Kunststoffkörper, in den mehrere Lichtleiter 23,24,25 eingebettet sind. Die Enden der Lichtleiter liegen an der Stirnseite 26 des Lichtkopfes 22 frei.

An dem rückwärtigen Ende des Lichtkopfes 22 ist eine Leiterplatte 27 befestigt, die mehrere lichtelektrische Wandler 28,29,30 trägt. Jeder dieser Wandler ist in einer Ausnehmung des Blockes des Lichtkopfes untergebracht und beispielsweise verklebt, so daß er sich in fester Ausrichtung zu dem rückwärtigen Ende des jeweiligen Lichtleiters 23,24,25 befindet. Die Wandler 28,29,30 sind in einer Reihe angeordnet, wobei die äußeren Wandler 28 und 30 Lichtempfänger sind und der mittlere Wandler 29 ein Lichtsender ist.

Gegen die Leiterplatte 27 drückt eine Federvorrichtung 31, die den Lichtkopf 22, der durch eine Öffnung im Boden der Abdeckung 16 hindurchragt, nach vorne drückt. Der Lichtkopf 22 stützt sich dabei mit einer Schulter 32 an dem Sockel 12 ab. Das vordere Ende des Lichtkopfes 22 ragt aus der Bodenwand der Abdeckung 16 heraus. Wenn der Stecker ST in die Steckdose SD eingesetzt wird, drückt er den Lichtkopf 22 entgegen der Wirkung der Federvorrichtung 31 zurück. Die Stirnfläche 26 ist mit einem schrägen Zentrierrand 33 umgeben.

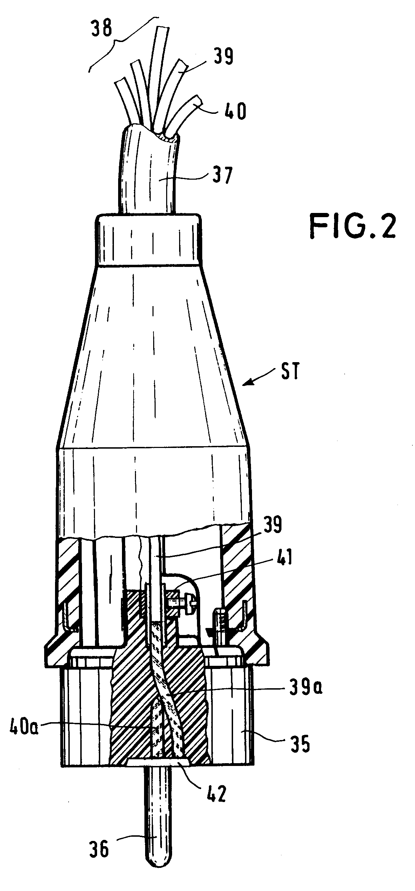

Der zugehörige Stecker ST, der in Fig. 2 dargestellt ist, weist einen Steckerkörper 35 auf, der passend in die Abdeckung 16 der Steckdose SD eingesteckt wird und von dem Kontaktstifte 36 abstehen, die durch die Löcher 17 der Abdeckung 12 hindurchgesteckt werden. Der Stecker ST ist mit einem Kabel 37 verbunden, das außer drei elektrischen Adern 38 zwei Lichtleiter 39,40 enthält. Der Lichtleiter 39 ist durch eine Verbindungsvorrichtung 41 mit einem in den Steckerkörper 35 fest eingebetteten Lichtleiter 39a verbunden und der Lichtleiter 40 ist über eine ähnliche Verbindungsvorrichtung mit einem in den Steckerkörper 35 fest eingebetteten Lichtleiter 40a verbunden. Die beiden Lichtleiter 39a,40a treten im Boden einer Zentrierausnehmung 42 aus, d.h. ihre Enden schließen bündig mit dem Boden der Zentrierausnehmung 42 ab. Die Zentrierausnehmung 42 ist eine längliche Ausnehmung, deren Form und Größe derjenigen der Stirnfläche 26 des Lichtkopfes 22 entspricht. Wenn der Stecker ST in die Steckdose SD eingesteckt wird, greift die Zentrierausnehmung 42 an dem Lichtkopf 22 an, der dadurch seitlich zentriert wird. Da das Maß des Vorstehens des Zentrierkopfes 22 über den Boden der Abdeckung 16 größer ist als die Tiefe der Zentrierausnehmung 42, wird der Lichtkopf entgegen der Wirkung der Federvorrichtung 31 ein Stück weit zurückgedrückt. Dabei gelangen die zentrisch angeordneten Lichtleiter 24 und 40a in gegenseitige Ausrichtung und Anlage aneinander. Der Lichtleiter 39a des Steckers ST gelangt entweder in Ausrichtung mit dem Lichtleiter 23 oder mit dem Lichtleiter 25 der Steckdose SD, in Abhängigkeit davon, in welcher Orientierung der Stecker ST in die Steckdose SD eingesteckt wird.

Damit eine seitliche Selbstausrichtung des Lichtkopfes 22 auf den jeweiligen Stecker ST erfolgen kann, hat die Öffnung im Boden der Abdeckung 16, durch die der Lichtkopf 22 hindurchragt, ein Übermaß gegenüber dem Lichtkopf, so daß der Lichtkopf eine gewisse freie Bewegungsmöglichkeit in der Abdeckung 16 hat.

Die Steckdose SD enthält eine Busankopplungseinheit. Diese wandelt Signaltelegramme, die auf gebäudeseitig installierten Busleitungen ankommen, in entsprechende Signale für das externe elektrische Gerät um, das über den Stecker ST und das Kabel 37 angeschlossen ist. Diese Signale werden durch den Wandler 29 in Lichtsignale umgewandelt, welche durch den Lichtwellenleiter 40 des Kabels 37 übertragen werden. In dem an das Kabel 37 angeschlossenen elektrischen Gerät werden die Lichtsignale wieder in elektrische Signale umgewandelt.

Andererseits werden elektrische Signale, die von einer Steuereinrichtung oder einem Meßwertaufnehmer des elektrischen Geräts erzeugt werden, zunächst in Lichtsignale umgewandelt, die über den Lichtwellenleiter 39 durch das Kabel 37 übertragen werden. Diese Lichtsignale werden in dem jeweils empfangenden Wandler 28 oder 30 der Steckdose SD eingekoppelt, wo sie in elektrische Signale umgewandelt werden. Diese elektrischen Signale werden dem Busankoppler zugeführt, der sie in Telegramme umwandelt, welche an die gebäudeseitig installierte Busleitung übertragen werden.

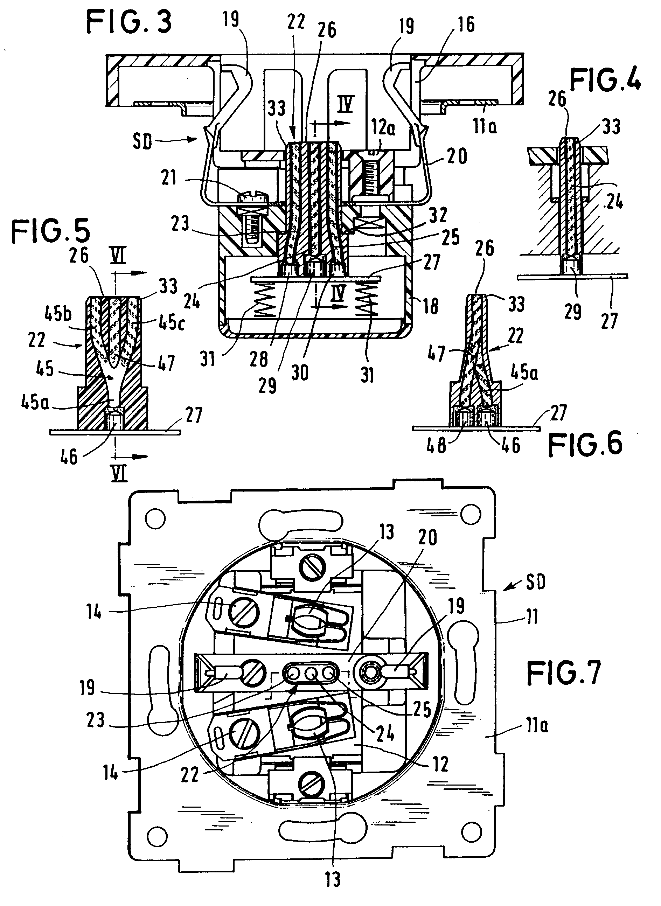

In den Fign. 5 und 6 ist eine andere Ausführungsform des Lichtkopfes 22 dargestellt. Hierbei enthält der Lichtkopf einen Y-Splitter 45, dessen Stamm 45a einem lichtempfangenden lichtelektrischen Wandler 46 zugewandt ist, während die Zweige 45b,45c in der Stirnseite 26 münden. Außer dem Y-Splitter 45 ist ein mittlerer Lichtleiter 47 vorgesehen, der sich von der Stirnseite 26 zu einem lichtsendenden lichtelektrischen Wandler 48 erstreckt. Der Y-Splitter 45 bewirkt, daß der Stecker ST in jeder seiner beiden möglichen Orientierungen in die Steckdose eingesteckt werden kann und daß dabei der Lichtleiter 39a entweder mit dem Zweig 45b oder dem Zweig 45c des Lichtkopfes 22 der Steckdose SD zur Ausrichtung kommt.

Bei dem Ausführungsbeispiel von Fig. 8 ist die Steckdose SD in einer Wanddose 45 enthalten. In dieser Wanddose 45 ist der Rahmen 11 festgeklemmt, der den Sockel 12 trägt. Der Rahmen 11 stützt sich mit seiner Frontplatte 11a an der Vorderseite der Wand ab. An dem Sockel 12 ist die Abdeckung 16 festgeschraubt, die eine topfförmige Aufnahme für den Stecker aufweist. Durch den Sockel 12 ragt der Lichtkopf 22 axial hindurch. Am rückwärtigen Ende des Lichtkopfes 22 ist ein Gehäuse 27a befestigt, in dem sich die zugehörigen lichtelektrischen Wandler befinden. Der Lichtkopf 22 enthält mindestens einen axial verlaufenden Lichtleiter oder an seinem vorderen Ende die Wandler 28,29,30. Das Gehäuse 27a ist an Stiften 46 des Sockels 12 axial verschiebbar geführt. An den rückwärtigen Köpfen der Stifte 46 sind Federn abgestützt, die die Federvorrichtung 31 bilden und die das Gehäuse 27a mit dem Lichtkopf 22 in Richtung auf den Sockel 12, also nach vorne, drücken. Das vordere Ende des Lichtkopfes 22 ist an dem Boden der Abdeckung 16 abgestützt. Es weist einen Ansatz 22a von verringertem Querschnitt auf, der in die Öffnung 47 im Boden der Abdeckung 16 hineinragt und entweder bündig mit der Bodenfläche abschließt oder über diese hinaus vorsteht. Der Aufsatz 22a kann durch eine Verlängerung des Lichtleiters bzw. durch die aus dem Lichtkopf 22 herausragenden Köpfe der Wandler 28,29,30 gebildet werden.

Wenn auf die Wand, in die die Steckdose eingesetzt ist, Tapeten aufgeklebt werden, überdecken diese die Frontplatte 11a des Rahmens 11. Die Abdeckung 16 legt sich mit ihrem Rand jedoch an die Vorderseite der Tapete an. Unterschiedliche Tapetenstärken können somit bewirken, daß die Abdeckung nach ihrer Montage nicht fest am Sockel 12 anliegt. In diesem Fall drückt die Federvorrichtung 31 den Lichtkopf 22 dennoch gegen den Boden der Abdeckung, so daß der Lichtkopf sich selbsttätig auf die jeweils eingenommene Position der Abdeckung 16 einstellt. Eine solche selbsttätige Einstellung erfolgt auch dann, wenn die Abdeckung 16 infolge einer ungenauen Montage der Steckdose oder aus anderen Gründen nicht die vorgesehene Position in Bezug auf den Sockel 12 einnimmt.

Wenn der Ansatz 22a des Lichtkopfes 22 über den Boden des Ansatzes hinaus vorsteht, erfolgt zusätzlich eine korrekte Einstellung der Position des Lichtkopfes 22 durch den in die Abdeckung 16 eingesetzten Stecker.

## Patentansprüche

1. Elektrische Steckvorrichtung mit einem Stecker (ST) und einer mit einer Abdeckung (16) versehenen Steckdose (SD),
**dadurch gekennzeichnet,**
daß die Steckdose (SD) einen Lichtkopf (22) enthält, der mindestens einen lichtelektrischen Wandler (28,29,30) mit einem in dem Stecker (ST) vorgesehenen Lichtleiter (39a,40a) koppelt, und daß der Lichtkopf (22) axial bewegbar geführt ist und von dem Stecker (ST) oder der Abdeckung (16) gegen die Wirkung einer Federvorrichtung (31) zurückgedrückt wird.

2. Steckvorrichtung nach Anspruch 1, dadurch gekennzeichnet, daß der Stecker (ST) an seiner Stirnseite eine Zentrierausnehmung (42) für die Seitenzentrierung des Lichtkopfes (22) aufweist.

3. Steckvorrichtung nach Anspruch 2, dadurch gekennzeichnet, daß der Lichtkopf (22) weiter vorsteht als die Tiefe der Zentrierausnehmung (42).

4. Steckvorrichtung nach einem der Ansprüche 1-3, dadurch gekennzeichnet, daß der lichtelektrische Wandler (28,29,30) an dem Lichtkopf (22) befestigt ist.

5. Steckvorrichtung nach einem der Ansprüche 1-4, dadurch gekennzeichnet, daß der Lichtkopf zwei symmetrisch zueinander angeordnete Lichtleiter (23,25) enthält, die von der dem Stecker (ST) zugewandten Stirnseite (26) zu einander gleichen lichtelektrischen Wandlern (28,30) führen, wobei in unterschiedlichen Orientierungen des Steckers (ST) in der Steckdose (SD) jeweils ein anderer dieser lichtelektrischen Leiter (23,25) in Ausrichtung mit demselben lichtelektrischen Leiter (39a) des Steckers (ST) ist.

6. Steckvorrichtung nach einem der Ansprüche 1-4, dadurch gekennzeichnet, daß der Lichtkopf (22) einen Y-Splitter (45) enthält, dessen Stamm (45a) mit einem lichtelektrischen Wandler (46) gekoppelt ist und dessen Zweige (45b,45c) zu der dem Stecker (ST) zugewandten Stirnseite (26) führen, wobei in unterschiedlichen Orientierungen des Steckers (ST) in der Steckdose (SD) jeweils ein anderer Zweig des Y-Splitters (45) in Ausrichtung mit demselben Lichtleiter (39a) des Steckers (ST) ist.

7. Steckdose (SD) zur Verwendung in einer Steckvorrichtung nach einem der Ansprüche 1-6.

8. Stecker (ST) zur Verwendung in einer Steckvorrichtung nach einem der Ansprüche 1-6.
